# EUROPÄISCHE PATENTSCHRIFT

(11) **EP 3 197 930 B1**
(45) Veröffentlichungstag und Bekanntmachung des Hinweises auf die Patenterteilung: **08.11.2023**
(21) Anmeldenummer: 15791252.8
(22) Anmeldetag: 22.09.2015
(51) Int. Cl.: C08G 18/76, C08G 18/16, C08G 18/20, C08G 18/30, C08G 18/48, C09J 175/08

(54) **LAGERSTABILER, FEUCHTIGKEITSHÄRTENDER POLYURETHANKLEBSTOFF MIT RASCHEM HAFTUNGSAUFBAU AUF GLAS**
STORAGE-STABLE, LIQUID-HARDENING POLYURETHANE ADHESIVE WITH RAPID ADHESION ON GLASS
COLLE POLYURÉTHANE DURCISSANT À L'HUMIDITÉ, STABLE AU STOCKAGE À ADHÉRENCE RAPIDE SUR LE VERRE

(30) Priorität: 22.09.2014 EP 14185761
(43) Veröffentlichungstag der Anmeldung: 02.08.2017
(73) Patentinhaber: Sika Technology AG, 6340 Baar (CH)
(72) Erfinder: ZAHN, Alain, 8610 Uster (CH); SCHLUMPF, Michael, CH-8143 Stallikon (CH); BURCKHARDT, Urs, CH-8049 Zürich (CH)
(74) Vertreter: Sika Patent Attorneys
(86) Internationale Anmeldenummer: PCT/EP2015/070117
(87) Internationale Veröffentlichungsnummer: WO 2016/045927

(56) Entgegenhaltungen:
- EP-A1- 1 857 480
- EP-A1- 2 706 075
- DD-A1- 108 103
- US-A- 5 290 853

## Beschreibung

### Technisches Gebiet

Die Erfindung betrifft feuchtigkeitshärtende Zusammensetzungen auf Polyurethanbasis, die sich für Klebe- und Abdichtungsanwendungen in der Fertigungsindustrie und in Fahrzeugbau und -reparatur, insbesondere für die Verklebung von Glasscheiben, eignen.

### Stand der Technik

Feuchtigkeitshärtende Klebstoffe auf Polyurethan-Basis werden in der industriellen Fertigung seit langem eingesetzt, beispielsweise zum elastischen Verkleben und Abdichten von Glasscheiben in der Herstellung und Reparatur von Fahrzeugen wie Automobilen, Lastwagen, Zügen oder Schiffen. Insbesondere bei schnellen Klebeprozessen, in denen der Klebeverbund rasch kraftschlüssig sein muss, weil die Verklebung bald nach der Fügung der Substrate belastet werden soll, werden diese typischerweise vorbehandelt, beispielsweise mit einem Aktivator oder einem Primer, um den Haftungsaufbau zwischen Substrat und Klebstoff zu unterstützen. Die Vorbehandlung stellt aber einen zusätzlichen, zeitaufwändigen Arbeitsschritt dar, der Kosten verursacht und die Komplexität und damit die Fehleranfälligkeit des Klebeprozesses erhöht. Zur Kostenreduktion und zur Erhöhung der Prozesssicherheit besteht deshalb ein starker Wunsch nach Klebstoffen, die auch zu solchen Substraten zuverlässig und möglichst schnell eine gute Haftkraft entwickeln, welche nicht mittels Aktivator oder Primer vorbehandelt wurden. Eine einfache Möglichkeit, den Haftungsaufbau eines Klebstoffs zum Substrat zu verbessern, besteht darin, ihm einen auf dem jeweiligen Substrat wirksamen Haftvermittler zuzugeben. Für Glas und Siebdruckkeramiken als Substrate sind dies organofunktionelle Silane, wie sie auch in Aktivatoren enthalten sind. Dabei handelt man sich allerdings den Nachteil ein, dass der Klebstoff an Haltbarkeit verlieren kann, weil er aufgrund von unerwünschten Reaktionen des Silans mit dem Prepolymer während der Lagerzeit oft deutlich verdickt und damit bald nur noch schwierig oder gar nicht mehr applizierbar ist. Ausserdem vermindert sich auch seine mechanische Festigkeit nach der Aushärtung, da das im Klebstoff enthaltene Silan bei der Aushärtung einen Alkohol freisetzt, welche im Polyurethan zu Kettenabbrüchen führt. Diese Effekte treten umso deutlicher auf, je stärker der Klebstoff bei der Lagerung und Aushärtung erwärmt wird und je mehr auf die Silangruppen katalytisch wirkende Substanzen im Klebstoff enthalten sind, die wiederum eine rasche Wirksamkeit des Silans für den Haftungsaufbau gewährleisten und deshalb erwünscht sind. Für die Silangruppen äusserst wirksame Katalysatoren sind insbesondere Organozinn-Verbindungen, wie beispielsweise Dibutylzinndilaurat oder Dibutylzinndiacetat, welche oft gleichzeitig als Katalysatoren für die Aushärtung des Klebstoffs sowie vorgängig bei der Herstellung des im Klebstoff enthaltenen Prepolymers eingesetzt werden. Einkomponentige Polyurethan-Klebstoffe, welche sowohl Organozinn-Verbindungen als auch organofunktionelle Silane enthalten, bauen besonders rasch Festigkeit zu mineralischen Substraten auf, sind aber auch besonders wenig haltbar und zeigen eine besonders geringe Festigkeit nach Aushärtung. Mit speziellen organofunktionellen Silanen, welche eine weniger reaktive Silangruppe aufweisen, lassen sich die unerwünschten Effekte abmildern; entsprechend verlangsamt sich aber der Haftungsaufbau, insbesondere bei einer Temperatur im Bereich von 23 °C oder darunter. Bisher erhältliche einkomponentige Polyurethanklebstoffe vermögen noch nicht alle Anforderungen bezüglich Haltbarkeit, Verarbeitbarkeit und schnellem Haftungsaufbau zu erfüllen wenn sie ohne Haftvermittler oder Primer angewendet werden. Daher besteht nach wie vor ein Bedürfnis nach einer solchen Lösung. US5290853 beschreibt einkomponentige Polyurethanklebstoffe enthaltend einen Metallkatalysator und einen Chelator. EP1857480 und 00108103 beschreiben mehrkomponentige Klebstoffe.

### Darstellung der Erfindung

Aufgabe der vorliegenden Erfindung ist es daher, einen feuchtigkeitshärtenden Polyurethan-Klebstoff mit langer Haltbarkeit, rascher Aushärtung bei schnellem Haftungsaufbau auf mineralischen Substraten wie Glas und Siebdruckkeramik sowie hoher Endfestigkeit und -dehnung bereitzustellen, der geeignet ist zum elastischen Verkleben und Abdichten von Glasscheiben, insbesondere in der Herstellung oder Reparatur von Fahrzeugen, ohne dass die Glasscheiben dabei zwingend mittels Aktivatoren oder Primern vorbehandelt sein müssen.

Überraschenderweise wurde nun gefunden, dass Zusammensetzungen gemäss Anspruch 1 diese Aufgabe lösen.

Die erfindungsgemässe Klebstoff-Zusammensetzung weist eine lange Haltbarkeit auf, d.h. ist auch nach einer längeren Lagerzeit, beispielsweise mehreren Monaten bis zu einem Jahr, in ihren Applikationseigenschaften, insbesondere der Viskosität, wenig verändert und somit in der vorgesehenen Weise anwendbar. Trotzdem härtet sie schnell aus und bildet dabei ein Material von hoher Festigkeit und Beständigkeit, auch bei erhöhter Applikationstemperatur. Gleichzeitig baut sie vergleichsweise rasch und zuverlässig eine gute Haftung auf mineralischen Substraten wie Glas oder Siebdruckkeramik, auch wenn diese nicht oder nur geringfügig vorbehandelt wurden, und ermöglicht damit ein ökonomisches Klebeverfahren mit hoher Prozesssicherheit.

Weiterhin Gegenstand der Erfindung ist ein Verfahren zur Stabilisierung eines feuchtigkeitshärtenden Klebstoffs auf Polyurethan-Basis enthaltend einen Silan-Haftvermittler und einen Amin-Katalysator mittels eines Chelatkomplex-Bildners. Das erfindungsgemässe Verfahren ermöglicht eine deutliche Verlängerung der Haltbarkeit des Klebstoffs, d.h. der Zeit, in der sich der Klebstoff nur geringfügig in seinen Eigenschaften, insbesondere der Viskosität, ändert und somit in der vorgesehenen Weise anwendbar bleibt, ohne dass der Klebstoff dadurch an Geschwindigkeit in der Aushärtung und beim Haftungsaufbau einbüsst.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine feuchtigkeitshärtende Klebstoff-Zusammensetzung umfassend:
a) mindestens ein Isocyanatgruppen aufweisendes Polyurethanpolymer,
b) mindestens einen Silan-Haftvermittler,
c) mindestens einen Metall- und einen Amin-Katalysator, und
d) mindestens einen Chelatkomplex-Bildner, der einen aromatischen Ring enthält.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten. Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird. Als "Raumtemperatur" wird im vorliegenden Dokument eine Temperatur von 23 °C bezeichnet.

Als Isocyanatgruppen aufweisende Polyurethanpolymere zur Herstellung einer erfindungsgemässen Zusammensetzung eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.2 bis 3 Gew.-%, besonders bevorzugt 0.3 bis 2.5 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.3:1 bis 4:1, insbesondere 1.5:1 bis 3:1 und besonders bevorzugt 1.7:1 bis 2.5:1 erhalten werden.

Geeignete Polyole für die Herstellung des Isocyanatgruppen aufweisenden Polyurethanpolymers sind insbesondere Polyetherpolyole, Styrol-Acrylnitrilgepfropfte Polyetherpolyole, Polyesterpolyole, Polycarbonatpolyole, Poly(meth)acrylatpolyole, polyhydroxyfunktionelle Fette und Öle oder Polykohlenwasserstoffpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butadien oder Diengemischen und Vinylmonomeren wie Styrol, Acrylnitril oder Isobutylen, oder polyhydroxyfunktionelle Polybutadienpolyole, beispielsweise solche, die durch Oxidation von Polybutadien oder Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 20'000 g/mol, und eine mittlere OH-Funktionalität im Bereich von 1.6 bis 3 auf.

Besonders geeignete Polyole sind Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden. Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin-und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate, wobei MDI, insbesondere das Isomer 4,4'-MDI besonders bevorzugt ist.

In der erfindungsgemässen Zusammensetzung ist das Isocyanatgruppen aufweisende Polyurethanpolymer bevorzugt in einer Menge von 10 Gew.-% bis 70 Gew.-%, insbesondere in einer Menge von 15 Gew.-% bis 60 Gew.-%, besonders bevorzugt 20 Gew.-% bis 50 Gew.-%, bezogen auf die gesamte Zusammensetzung, vorhanden.

Weiterhin enthält die erfindungsgemässe Zusammensetzung mindestens einen Silan-Haftvermittler. Dabei handelt es sich um einzelne oder gemischte Organoalkoxysilane, die mindestens einen nicht hydrolisierbaren organischen Rest am Siliciumatom besitzen, wobei dieser Rest bevorzugt Heteroatome enthält, die über freie Elektronenpaare, kovalente, ionische oder andere Mechanismen eine Wechselwirkung mit einem Substrat und damit Haftung auf diesem Substrat aufbauen können. "Nicht hydrolisierbar" bedeutet in diesem Zusammenhang eine Silicium-Kohlenstoffbindung, im Gegensatz zum Beispiel zu einer hydrolisierbaren Slicium-Sauerstoff-Bindung. Im Falle von Siliciumoxid-haltigen Haftuntergründen, wie Gläsern, kann auch die Silangruppe des Organoalkoxysilans über eine Hydrolyse-/Kondensationsreaktion eine kovalente Haftung zum Untergrund ermöglichen, während der organische Rest, z.B. über eine Reaktion einer allfällig vorhandenen Hydroxyl- oder Amingruppe mit einer Isocyanatgruppe eines Polyurethanpolymers, mit der Klebstoffzusammensetzung reagiert.

Als Silan-Haftvermittler geeignet sind Organoalkoxysilane ("Silane"), welche am organischen Rest eine Reaktivgruppe tragen, insbesondere Epoxysilane, Mercaptosilane, (Meth)acrylsilane, Isocyanatosilane, Anhydridosilane, S-(Alkylcarbonyl)-mercaptosilane, Aldiminosilane oder oligomere Formen dieser Silane, oder Addukte von Amino- oder Mercaptosilanen mit Polyisocyanaten. Bevorzugt sind 3-Glycidoxypropyltrimethoxysilan, β-(3,4-Epoxycyclohexyl)ethyltrimethoxysilan, 3-Mercaptopropyltrimethoxysilan oder 3-Methacryloxypropyltrimethoxysilan. Am meisten bevorzugt ist 3-Glycidoxypropyltrimethoxysilan.

Der Gehalt an Silan-Haftvermittler in der Zusammensetzung liegt bevorzugt im Bereich von 0.01 Gew.-% bis 1.0 Gew.-%, insbesondere 0.05 Gew.-% bis 0.5 Gew.-%, bezogen auf die gesamte Zusammensetzung.

Der erfindungsgemässe Einsatz eines Silan-Haftvermittlers bietet den Vorteil, dass der Haftungsaufbau des Klebstoffs zum Substrat verbessert wird, ohne dass das Substrat vorher mit Primer oder Aktivator vorbehandelt werden muss. Dies ist insbesondere vorteilhaft bei Glas und Siebdruckkeramiken als Substrate.

Die erfindungsgemässe Zusammensetzung enthält weiterhin mindestens einen Amin-Katalysator. Als Amin-Katalysatoren geeignet sind tertiäre Amine, insbesondere solche mit einem tiefen pKa-Wert, bevorzugt ein pKa-Wert zwischen 12 und 7. Geeignete Amin-Katalysatoren sind beispielsweise N-Ethyldiisopropylamin, N,N,N',N'-Tetramethyl-alkylendiamine, 1,4-Diazabicyclo[2.2.2]octan, sowie bevorzugt 2,2'-Dimorpholinodiethylether (DMDEE) sowie Derivate davon mit Substituenten an den Morpholinringen. Besonders bevorzugt ist DMDEE.

Es ist bevorzugt dass die erfindungsgemässe Zusammensetzung keine oder nur unwesentliche Mengen an Säuren enthält, da diese durch Neutralisationsreaktionen mit dem Amin-Katalysator dessen Aktivität wesentlich hemmen. Unwesentliche Mengen an Säuren sind solche, die nicht mehr als 10 Mol % bezogen auf den Amin-Katalysator ausmachen.

Der Gehalt an Amin-Katalysator in der Zusammensetzung liegt bevorzugt im Bereich von 0.05 Gew.-% bis 1.0 Gew.-%, insbesondere 0.1 Gew.-% bis 0.8 Gew.-%, besonders bevorzugt 0.15 Gew.-% bis 0.6 Gew.-%, bezogen auf die gesamte Zusammensetzung.

Weiterhin enthält die erfindungsgemässe Zusammensetzung mindestens einen Chelatkomplex-Bildner. Ein "Chelatkomplex-Bildner" im Sinne der Erfindung ist eine organische Verbindung frei von ionischen Bindungen, welche zusammen mit einem Metallkation eine Metall-Komplexverbindung bilden kann, in welcher der Chelatkomplex-Bildner in einfach oder mehrfach deprotonierter Form einen zwei- oder mehrzähnigen Liganden darstellt. Die vom Chelatkomplex-Bildner komplexierbaren Metallkationen können dabei bereits in den Rohstoffen der Zusammensetzung enthalten sein (beispielsweise aus der Synthese der weiter oben genannten Isocyanatgruppen aufweisende Polyurethanpolymere), oder sie stammen beispielsweise von allfällig später zugegebenen Metall-Katalysatoren (siehe weiter unten).

Als Chelatkomplex-Bildner geeignet sind insbesondere Verbindungen aus der Klasse der 1,3-Diketone, 1,3-Ketoester, 1,3-Ketoamide und 8-Hydroxychinoline. Erfindungsgemäss sind Chelatkomplex-Bildner, welche mindestens einen aromatischen Ring enthalten.

Besonders bevorzugt ist 8-Hydroxychinolin.

Weiterhin besonders bevorzugt ist Dibenzoylmethan.

Der Gehalt an Chelatkomplex-Bildner in der Zusammensetzung liegt bevorzugt im Bereich von 0.01 Gew.-% bis 0.5 Gew.-%, insbesondere 0.02 Gew.-% bis 0.2 Gew.-%, besonders bevorzugt 0.03 Gew.-% bis 0.1 Gew.-%, bezogen auf die gesamte Zusammensetzung.

Der erfindungsgmässe Einsatz des Chelatkomplex-Bildners bietet vor allem den Vorteil, dass die Lagerstabilität des Silan-Haftvermittler-enthaltenden Klebstoffs erhöht wird. Der Chelatkomplex-Bildner hemmt unerwünschte Reaktionen des Silans mit dem Prepolymer während der Lagerzeit, was ohne Chelatkomplex-Bildner dazu führen würde, dass der Klebstoff während der Lagerzeit deutlich verdickt und damit bald nur noch schwierig oder gar nicht mehr applizierbar wäre. Ausserdem vermindert sich im Silan-Haftvermittler-enthaltenden Klebstoff ohne Chelatkomplex-Bildner auch seine mechanische Festigkeit nach der Aushärtung, da das im Klebstoff enthaltene Silan bei der Aushärtung einen Alkohol freisetzt, welche im Polyurethan zu Kettenabbrüchen führt.

Bevorzugt umfasst die beschriebene Zusammensetzung mindestens einen Metall-Katalysator. Dieser kann entweder zusätzlich beigefügt werden, oder bereits in den Rohstoffen der Zusammensetzung vorhanden sein, beispielsweise aus der Synthese eines Isocyanatgruppen aufweisendenden Polyurethanpolymers. Als Metall-Katalysator bevorzugt sind Organozinn(IV)-Verbindungen, Organotitanate oder Organozirkonate. Besonders bevorzugt sind Organozinn(IV)-Verbindungen. Als Organozinn(IV)-Verbindung geeignet sind insbesondere Dialkylzinnoxide, Dialkylzinndichloride, Dialkylzinndicarboxylate und Dialkylzinndiketonate, bevorzugt Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat.

Der Gehalt an Metall-Katalysator in der Zusammensetzung liegt bevorzugt im Bereich von 0.001 Gew.-% bis 1.0 Gew.-%, insbesondere 0.005 Gew.-% bis 0.1 Gew.-%, bezogen auf die gesamte Zusammensetzung.

Der Gehalt an allfällig verwendeter Organozinn(IV)-Verbindung in der Zusammensetzung liegt bevorzugt im Bereich von 0.001 Gew.-% bis 0.2 Gew.-%, insbesondere 0.005 Gew.-% bis 0.1 Gew.-%, bezogen auf die gesamte Zusammensetzung.

Das molare Verhältnis zwischen Chelatkomplex-Bildner und Metall-Katalysator liegt bevorzugt im Bereich von 2 bis 6, insbesondere von 2 bis 4.

Die beschriebene Zusammensetzung umfasst bevorzugt weitere, für Polyurethan-Klebstoffe gebräuchliche Inhaltsstoffe, insbesondere Füllstoffe, Weichmacher, Rheologie-Additive, Haftvermittler, Trocknungsmittel oder Stabilisatoren gegen UV-Licht und Oxidation, sowie weitere solche gängige Zusätze.

Insbesondere umfasst die Zusammensetzung mindestens einen Füllstoff. Als Füllstoff geeignet sind insbesondere natürliche, gemahlene oder gefällte Kreiden (die gänzlich oder vorwiegend aus Calciumcarbonat bestehen), welche gegebenenfalls mit Fettsäuren, insbesondere Stearaten, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen. Als Füllstoffe besonders bevorzugt sind gemahlene Calciumcarbonate, calcinierte Kaoline oder Russ. Am meisten bevorzugt sind Kombinationen von gemahlenen Calciumcarbonaten oder calcinierten Kaolinen und Russ.

Der Gehalt an Füllstoff in der Zusammensetzung liegt bevorzugt im Bereich von 10 Gew.-% bis 70 Gew.-%, insbesondere 20 Gew.-% bis 60 Gew.-%, besonders bevorzugt 30 Gew.-% bis 50 Gew.-%, bezogen auf die gesamte Zusammensetzung.

Insbesondere umfasst die Zusammensetzung mindestens einen Weichmacher. Als Weichmacher geeignet sind insbesondere Ester organischer Carbonsäuren, insbesondere Phthalate wie Diisononylphthalat oder Diisodecylphthalat, hydrierte Phthalate wie Diisononyl-1,2-cyclohexan-dicarboxylat, Adipate wie Dioctyladipat, Azelate und Sebacate, oder Ester organischer Phosphor- und Sulfonsäuren, oder Kohlenwasserstoffe wie Polybutene oder Polyisobutene. Als Weichmacher bevorzugt sind Phthalate, hydrierte Phthalate oder Adipate. Am meisten bevorzugt sind Diisononylphthalat, Diisodecylphthalat oder Diiso-nonyl-1,2-cyclohexandicarboxylat.

Der Gehalt an Weichmacher in der Zusammensetzung liegt bevorzugt im Bereich von 5 Gew.-% bis 40 Gew.-%, insbesondere 10 Gew.-% bis 30 Gew.-%, besonders bevorzugt 15 Gew.-% bis 25 Gew.-%, bezogen auf die gesamte Zusammensetzung.

Weiterhin kann die erfindungsgemässe Zusammensetzung wie oben erwähnt zusätzlich weitere für Polyurethan-Klebstoffe gebräuchliche Inhaltsstoffe enthalten. Beispielsweise sind derartige Inhaltsstoffe:
- Vernetzer, wie beispielsweise Oligomere und Derivate von Diisocyanaten wie MDI, TDI, HDI oder IPDI, insbesondere Isocyanurate, Carbodiimide, Uretonimide, Biurete, Allophanate und Iminooxadiazindione, oder Gemische aus MDI und MDI-Homologen (polymeres MDI oder PMDI);
- Trocknungsmittel, wie beispielsweise p-Tosylisocyanat und andere reaktive Isocyanate, Calciumoxid, oder Molekularsiebe;
- Rheologie-Modifizierer wie beispielsweise Verdickungsmittel, zum Beispiel Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren;
- Stabilisatoren gegen Wärme, Licht- und UV-Strahlung; flammhemmende Substanzen;
- oberflächenaktive Substanzen wie beispielsweise Netzmittel, Verlaufsmittel, Entlüftungsmittel oder Entschäumer;
- Biozide wie beispielsweise Algizide oder Fungizide;
sowie weitere üblicherweise in einkomponentigen Isocyanat-haltigen Zusammensetzungen eingesetzte Substanzen, wie zum Beispiel Fasern, beispielsweise aus Polyethylen; Farbstoffe, Pigmente, oder andere dem Fachmann bekannte Zusatzstoffe.

In einer besonders bevorzugten Ausführungsform umfasst die erfindungsgemässe Zusammensetzung:
a) 20 Gew.-% bis 50 Gew.-% von mindestens einem isocyanat-funktionellen Polymer,
b) 0.05 Gew.-% bis 0.5 Gew.-% von mindestens einem Silan-Haftvermittler, bevorzugt 3-Glycidoxypropyltrimethoxysilan,
c) 0.15 Gew.-% bis 0.6 Gew.-% von mindestens einem Amin-Katalysator, bevorzugt DMDEE,
d) 0.005 Gew.-% bis 0.1 Gew.-% von mindestens einer Organozinn(IV)-Verbindung,
e) 0.03 Gew.-% bis 0.1 Gew.-% von mindestens einem Chelatkomplex-Bildner, bevorzugt 8-Hydroxychinolin oder Dibenzoylmethan,
f) 30 Gew.-% bis 50 Gew.-% von mindestens einem Füllstoff, und
g) 15 Gew.-% bis 25 Gew.-% von mindestens einem Weichmacher,
bezogen auf die Gesamtzusammensetzung.

Eine derartige Zusammensetzung eignet sich zum Beispiel als Klebstoff zum Verkleben und Abdichten von Glas oder Siebdruckkeramik, beispielsweise im Rahmen von Fahrzeugbau oder -reparatur beim Verkleben von Glasscheiben.

Unter dem Einfluss von Feuchtigkeit, gegebenenfalls beschleunigt durch Erwärmung, härtet die erfindungsgemässe Zusammensetzung unter Vernetzung der isocyanatfunktionellen Polymere und gegebenenfalls enthaltenen Vernetzern und/oder latenten rasch aus. Die zur Aushärtung benötigte Feuchtigkeit kann aus der Luft stammen (Luftfeuchtigkeit), wobei die Zusammensetzung durch die Diffusion der Feuchtigkeit von aussen nach innen aushärtet. Die Zusammensetzung kann aber auch mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Zusammensetzung eine Wasser enthaltende Komponente zugespielsweise aus Polyethylen; Farbstoffe, Pigmente, oder andere dem Fachmann bekannte Zusatzstoffe.

In einer besonders bevorzugten Ausführungsform umfasst die erfindungsgemässe Zusammensetzung:
a) 20 Gew.-% bis 50 Gew.-% von mindestens einem isocyanatfunktionellen Polymer,
b) 0.05 Gew.-% bis 0.5 Gew.-% von mindestens einem Silan-Haftvermittler, bevorzugt 3-Glycidoxypropyltrimethoxysilan,
c) 0.15 Gew.-% bis 0.6 Gew.-% von mindestens einem Amin-Katalysator, bevorzugt DMDEE,
d) 0.005 Gew.-% bis 0.1 Gew.-% von mindestens einer Organozinn(IV)-Verbindung,
e) 0.03 Gew.-% bis 0.1 Gew.-% von mindestens einem Chelatkomplex-Bildner, bevorzugt 8-Hydroxychinolin,
f) 30 Gew.-% bis 50 Gew.-% von mindestens einem Füllstoff, und
g) 15 Gew.-% bis 25 Gew.-% von mindestens einem Weichmacher,
bezogen auf die Gesamtzusammensetzung.

Eine derartige Zusammensetzung eignet sich zum Beispiel als Klebstoff zum Verkleben und Abdichten von Glas oder Siebdruckkeramik, beispielsweise im Rahmen von Fahrzeugbau oder -reparatur beim Verkleben von Glasscheiben.

Unter dem Einfluss von Feuchtigkeit, gegebenenfalls beschleunigt durch Erwärmung, härtet die erfindungsgemässe Zusammensetzung unter Vernetzung der isocyanatfunktionellen Polymere und gegebenenfalls enthaltenen Vernetzern und/oder latenten rasch aus. Die zur Aushärtung benötigte Feuchtigkeit kann aus der Luft stammen (Luftfeuchtigkeit), wobei die Zusammensetzung durch die Diffusion der Feuchtigkeit von aussen nach innen aushärtet. Die Zusammensetzung kann aber auch mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Zusammensetzung eine Wasser enthaltende Komponente zugesetzt werden, zum Beispiel in Form einer wasserhaltigen Paste, die beispielsweise über einen Statikmischer homogen oder heterogen mit der Zusammensetzung vermischt wird.

Die erfindungsgemässe Zusammensetzung besitzt eine lange Haltbarkeit, das heisst, sie ist über längere Zeit lagerstabil. Als "lagerstabil" oder "lagerfähig" wird eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität, der benötigten Auspresskraft bei der Applikation aus dem Gebinde und der Vernetzungsgeschwindigkeit, durch die Lagerung in einem für ihren Gebrauch relevanten Ausmass verändert. Dies bedeutet zum Beispiel, dass die Auspresskraft bei der erfindungsgemässen Zusammensetzung, gemessen nach der weiter unten beschriebenen Methode bei 23 °C, nach einer Lagerung während 14 d bei 60°C (was eine beschleunigte Alterung bewirkt) bevorzugt um einen Faktor von höchstens 3, besonders bevorzugt höchstens 2.5, insbesondere höchstens 2, zunimmt im Vergleich zur Auspresskraft einer frisch hergestellten Zusammensetzung, die 7d bei 23 °C gelagert worden ist.

Weiterhin umfasst die vorliegende Erfindung die Verwendung einer vorhergehend beschriebenen Zusammensetzung als feuchtigkeitshärtender Klebstoff oder Dichtstoff. Die erfindungsgemässe Zusammensetzung eignet sich insbesondere für die Applikation auf Beton, Mörtel, Backstein, Ziegel, Gips, einem Naturstein wie Granit oder Marmor, Glas, Glaskeramik, Siebdruckkeramik, einem Metall oder einer Metalllegierung, Holz, einem Kunststoff oder einem lackierten Material.

Bevorzugt ist die Verwendung der Zusammensetzung als Klebstoff, beispielsweise für Glas, Glaskeramik oder Siebdruckkeramik.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, beisetzt werden, zum Beispiel in Form einer wasserhaltigen Paste, die beispielsweise über einen Statikmischer homogen oder heterogen mit der Zusammensetzung vermischt wird.

Die erfindungsgemässe Zusammensetzung besitzt eine lange Haltbarkeit, das heisst, sie ist über längere Zeit lagerstabil. Als "lagerstabil" oder "lagerfähig" wird eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität, der benötigten Auspresskraft bei der Applikation aus dem Gebinde und der Vernetzungsgeschwindigkeit, durch die Lagerung in einem für ihren Gebrauch relevanten Ausmass verändert. Dies bedeutet zum Beispiel, dass die Auspresskraft bei der erfindungsgemässen Zusammensetzung, gemessen nach der weiter unten beschriebenen Methode bei 23 °C, nach einer Lagerung während 14 d bei 60°C (was eine beschleunigte Alterung bewirkt) um weniger als 75%, bevorzugt weniger als 50%, zunimmt im Vergleich zur Auspresskraft bei einer frisch hergestellten Zusammensetzung, die 7d bei 23 °C gelagert worden ist.

Weiterhin umfasst die vorliegende Erfindung die Verwendung einer vorhergehend beschriebenen Zusammensetzung als feuchtigkeitshärtender Klebstoff oder Dichtstoff. Die erfindungsgemässe Zusammensetzung eignet sich insbesondere für die Applikation auf Beton, Mörtel, Backstein, Ziegel, Gips, einem Naturstein wie Granit oder Marmor, Glas, Glaskeramik, Siebdruckkeramik, einem Metall oder einer Metalllegierung, Holz, einem Kunststoff oder einem lackierten Material.

Bevorzugt ist die Verwendung der Zusammensetzung als Klebstoff, beispielsweise für Glas, Glaskeramik oder Siebdruckkeramik.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, beispielsweise aus einer Kartusche oder mittels Zahnspachtel aus einem grösseren Gebinde. Eine erfindungsgemässe Zusammensetzung mit guten Applikationseigenschaften weist bevorzugt eine hohe Standfestigkeit und einen kurzen Fadenzug sowie tiefe Viskosität bzw. Auspresskraft auf. Das heisst, sie lässt sich mit dem Zahnspachtel mit wenig Kraft verstreichen bzw. auspressen, bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Insbesondere weist die erfindungsgemässe Zusammensetzung eine niedrige Auspresskraft auf, gemessen nach der weiter unten beschriebenen Methode (siehe Beispiele) nach Konditionierung während 14d bei 60°C. In einer bevorzugten Ausführungsform beträgt die gemessene Auspresskraft ≤ 1500 N, in einer meist bevorzugten Ausführungsform ≤ 1250 N.

Die erfindungsgemässe Zusammensetzung wird insbesondere in einem Temperaturbereich zwischen 5°C und 45°C, bevorzugt im Bereich der Raumtemperatur, aufgetragen und härtet auch bei diesen Bedingungen aus. Gegebenenfalls wird sie vor dem Auftragen erwärmt, beispielsweise auf eine Temperatur im Bereich von 20°C bis 100°C, insbesondere 40°C bis 80°C, beispielsweise mit Hilfe eines Kartuschenofens.

Die Erfindung betrifft weiterhin ein Verfahren zur Stabilisierung einer feuchtigkeitshärtenden Klebstoff-Zusammensetzung auf Polyurethan-Basis enthaltend einen Silan-Haftvermittler und einen Amin-Katalysator, dadurch gekennzeichnet, dass der Klebstoff-Zusammensetzung ein Chelatkomplex-Bildner zugemischt wird, bevorzugt mit einem Anteil von 0.01 Gew.-% bis 0.5 Gew.-%, insbesondere 0.02 Gew.-% bis 0.2 Gew.-%, besonders bevorzugt 0.03 Gew.-% bis 0.1 Gew.-%, bezogen auf die Gesamtzusammensetzung. Die Beimischung eines Chelatkomplex-Bildners zu einer derartigen Zusammensetzung bewirkt eine Verbesserung der Lagerstabilität, ohne aber die mechanischen Eigenschaften der Zusammensetzung nach Aushärtung oder die Hafteigenschaften signifikant negativ zu beeinflussen. Dies ermöglicht eine einkomponentige Formulierung, die mit wenig oder gar keinem Aktivator oder Primer eingesetzt werden kann. Die Beimischung des Chelatkomplex-Bildners erfolgt bevorzugt bereits bei der Formulierung der Zusammensetzung, kann aber auch später, beispielsweise erst bei der Abfüllung, erfolgen. Es muss allerdings darauf geachtet werden, dass die Lagerstabilität bei Abwesenheit des Chelatkomplex-bildners nicht im erfindungsgemässen Masse gewährleistet ist.

Weiterhin betrifft die Erfindung eine ausgehärtete Zusammensetzung, welche erhältlich ist aus einer Zusammensetzung, wie sie vorhergehend beschrieben worden ist, nach deren Härtung mit Wasser, insbesondere in Form von Luftfeuchtigkeit.

Bei den Artikeln, welche mit einer erfindungsgemässen Zusammensetzung verklebt und/oder abgedichtet, handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltsmaschine, oder ein Transportmittel oder ein Anbauteil eines Transportmittels, insbesondere eine Glasscheibe.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Beschreibung der Messmethoden

Die **Zugfestigkeit** und die **Bruchdehnung** wurden nach DIN EN ISO 527 (Zuggeschwindigkeit: 200 mm/min) an während 14 Tagen (d) bei 23°C (Raumtemperatur, "RT") und 50% relativer Luftfeuchtigkeit ausgehärteten Filmen mit einer Schichtdicke von 2 mm bestimmt.

Für die Bestimmung der **Auspresskraft** wurden die Zusammensetzungen in innenlackierte Aluminiumkartuschen (Durchmesser aussen 46.9 mm, Durchmesser innen 46.2 mm Länge 215 mm, metrisches ISO-Gewinde M15 × 1.5 mm) gefüllt und mit einem Polyethlyen Stopfen (Durchmesser 46.1 mm) von Novelis Deutschland GmbH luftdicht verschlossen. Nach einer Konditionierung von 24 Stunden bei 23°C wurden die Kartuschen geöffnet und mittels Auspressgerät ausgepresst. Dafür wurde eine Düse mit einer 5 mm Innendurchmesser-Öffnung auf das Kartuschengewinde aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.

Weitere Messreihen wurde durchgeführt, nachdem identische Kartuschen jeweils während 7, 14 und 21 Tagen bei 60 °C gelagert und danach auf Raumtemperatur abgekühlt wurden. Die Durchführung dieser Messungen zur Auspresskraft erfolgte danach in der gleichen Vorgehensweise wie bei der ersten Messreihe. Diese weiteren Messreihen dienten einer Einschätzung der Lagerstabilität der Zusammensetzungen.

Für die Bestimmung der **Haftung** wurden Klebstoffraupen der hergestellten Zusammensetzungen auf die entsprechenden Substrate appliziert, unterschiedlichen Lagerungsbedingungen ausgesetzt und danach bei Raumtemperatur (23°C) und 50% relativer Luftfeuchtigkeit mittels "Raupentest" geprüft. Hierbei wird am Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Platzieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch Abschätzen des kohäsiven Anteils der Haftfläche (höherer kohäsiver Anteil bedeutet bessere Haftung):
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch)

Die Lagerungsbedingungen für die Haftversuche waren 7 Tage bei 23°C und 50% relativer Luftfeuchtigkeit ("7 d RT" in Tabelle 3); bzw. 7 Tage bei 23°C und 50% relativer Luftfeuchtigkeit, gefolgt von 7 Tage eingetaucht in Wasser bei Raumtemperatur ("+ 7 d H₂O" in Tabelle 3); bzw. 7 Tage bei 23°C und 50% relativer Luftfeuchtigkeit, gefolgt von 7 Tage eingetaucht in Wasser bei Raumtemperatur, gefolgt von 7 d bei 70 °C und 100 % relative Luftfeuchtigkeit ("+ 7 d 70/100" in Tabelle 3).

Als Substrate (Haftuntergründe) bei den oben beschriebenen Haftversuchen dienten folgende gläserne oder keramisch beschichtete gläserne Materialien: Automobilscheibenglas mit keramischer Beschichtung Typ Ferro 3402 ("Ferro 3402"), mit keramischer Beschichtung Typ Ferro 14251 ("Ferro 14251 ") und mit keramischer Beschichtung Typ Ferro 14279 ("Ferro 14278"), sowie Floatglas, luftseitig beklebt ("Glas Luft") und Floatglas, zinnseitig beklebt ("Glas Zinn"). Alle diese Haftuntergründe sind erhältlich von Rocholl GmbH, Deutschland. Herstellung des Isocyanatgruppen aufweisenden Polyurethanpolymers P-1 1300 g Polyoxypropylendiol (Acclaim^{®} 4200 N, Bayer MaterialScience AG, Deutschland; OH-Zahl 28.5 mg KOH/g), 2600 g Polyoxypropylenpolyoxyethylentriol (Caradol^{®} MD34-02, Shell Chemicals Ltd., UK; OH-Zahl 35.0 mg KOH/g), 600 g 4,4'-Methylendiphenyldiisocyanat (4,4'-MDI; Desmodur^{®} 44 MC L, Bayer MaterialScience AG, Deutschland) und 500 g Diisodecylphthalat (DIDP; Palatinol^{®} Z, BASF SE, Deutschland) wurden nach bekanntem Verfahren bei 80 °C zu einem NCO-terminierten Polyurethanpolymer mit einem Gehalt an freien Isocyanatgruppen von 2.05 Gew.-% umgesetzt.

### Herstellung der Zusammensetzungen Z1 bis Z4 und Ref-1 und Ref-2

In einem Vakuummischer wurden die in der Tabelle 1 angegebenen Inhaltsstoffe in den angegebenen Mengen in der angegebenen Reihenfolge zugegeben und vermischt und die Mischung schliesslich während 20 min bei 1000-1200 Umdrehungen unter Vakuum zu einer homogenen Paste verarbeitet. Diese wurde dann in innenlackierte Aluminium-Spreizkolben-Kartuschen abgefüllt.

Bei den Zusammensetzungen ***Z1*** und Z2 handelt es sich um erfindungsgemässe Beispiele. ***Ref-1*** und ***Ref-2***, Z3 und Z4 sind Vergleichsbeispiele.

**Tabelle 1: Zusammensetzung (in Gewichtsteilen) der erfindungsgemässen Zusammensetzungen Z1 bis Z4 und der Referenzzusammensetzungen Ref-1 und Ref-2.**

| *Inhaltsstoff* | ***Z1*** | ***Z2*** | ***Z3*** | ***Z4*** | ***Ref-1*** | ***Ref-2*** |
|---|---|---|---|---|---|---|
| Polymer *P-1* | 43.0 | 43.0 | 43.0 | 43.0 | 43.0 | 43.0 |
| DIDP ¹ | 19.8 | 19.5 | 19.8 | 19.8 | 20.3 | 20.5 |
| 8-Hydroxychinolin ² 10 Gew.-% in DIDP | 0.5 | - | - | - | - | - |
| Dibenzoylmethan ² 10 Gew.-% in DIDP | - | 0.8 | - | - | - | - |
| Ethylacetoacetat ² 10 Gew.-% in DIDP | - | - | 0.5 | - | - | - |
| N,N-Diethyl-3-oxobutan-amid ² 10 Gew.-% in DIDP | - | - | - | 0.5 | - | - |
| Silquest^{®} A-187 ³ | 0.3 | 0.3 | 0.3 | 0.3 | 0.3 | 0.3 |
| Russ | 15.0 | 15.0 | 15.0 | 15.0 | 15.0 | 15.0 |
| calciniertes Kaolin | 20.0 | 20.0 | 20.0 | 20.0 | 20.0 | 20.0 |
| Kieselsäure ⁴ | 1.0 | 1.0 | 1.0 | 1.0 | 1.0 | 1.0 |
| DMDEE ⁵ | 0.1 | 0.1 | 0.1 | 0.1 | 0.1 | 0.2 |
| Dibutylzinndiacetat ⁶ 10 Gew.-% in DIDP | 0.3 | 0.3 | 0.3 | 0.3 | 0.3 | - |
| ***TOTAL*** | *100* | *100* | *100* | *100* | *100* | *100* |

| | | | | | | |
|---|---|---|---|---|---|---|
| ¹ Diisodecylphthalat (DIDP), Palatinol^{®} 2, BASF SE, Deutschland ² Sigma-Aldrich Chemie GmbH, Schweiz ³ 3-Glycidoxy-propyltrimethoxysilan (Momentive Performance Materials AG, Deutschland ⁴ Aerosil^{®} R972, Evonik Industries AG, Deutschland ⁵ 2,2'-Dimorpholinodiethylether (DMDEE) (Lupragen^{®} N106, BASF SE, Deutschland) ⁶ BNT-CAT 400, BNT Chemicals GmbH, Deutschland | | | | | | |

**Tabelle 2: Testresultate der erfindungsgemässen Zusammensetzungen Z1 bis Z4 und der Referenzzusammensetzungen Ref-1 und Ref-2 nach den weiter oben beschriebenen Messmethoden.**

| *Messparameter* | ***Z1*** | ***Z2*** | ***Z3*** | ***Z4*** | ***Ref-1*** | ***Ref-2*** |
|---|---|---|---|---|---|---|
| Zugfestigkeit [MPa] | 10.0 | 8.3 | 8.5 | 7.8 | 7.4 | 9.6 |
| Bruchdehnung [%] | 360 | 410 | 420 | 400 | 360 | 340 |
| Auspresskraft 7d RT [N] | 540 | 526 | 551 | 529 | 516 | 523 |
| Auspresskraft 7d 60°C [N] | 681 | 696 | 842 | 823 | 1011 | 668 |
| Auspresskraft 14d 60°C [N] | 935 | 1037 | 1585 | 1320 | n.m. | 827 |
| Auspresskraft 21d 60°C [N] | 1046 | 1266 | 2303 | 1964 | n.m. | 863 |

| | | | | | | |
|---|---|---|---|---|---|---|
| "n.m." steht für "nicht messbar" (nicht auspressbar) | | | | | | |

**Tabelle 3: Resultate der Haftversuche auf verschiedenen Substraten unter verschiedenen Bediungungen der erfindungsgemässen Zusammensetzungen Z1 bis Z4 und der Referenzzusammensetzungen Ref-1 und Ref-2.**

| *Substrat* | *Bedingungen* | ***Z1*** | ***Z2*** | ***Z3*** | ***Z4*** | ***Ref-1*** | ***Ref-2*** |
|---|---|---|---|---|---|---|---|
| Ferro 3402 | 7d RT | 5 | 4 | 5 | 5 | 4 | 5 |
| | + 7d H₂O | 4 | 5 | 5 | 5 | 4 | 5 |
| | + 7d 70/100 | 1 | 1 | 1 | 4 | 1 | 2 |
| Ferro 14251 | 7d RT | 3 | 1 | 4 | 1 | 1 | 5 |
| | + 7d H₂O | 1 | 1 | 1 | 1 | 1 | 4 |
| | + 7d 70/100 | 1 | 1 | 1 | 1 | 1 | 1 |
| Ferro 14279 | 7d RT | 4 | 1 | 1 | 1 | 1 | 5 |
| | + 7d H₂O | 1 | 1 | 1 | 1 | 1 | 1 |
| | + 7d 70/100 | 1 | 1 | 1 | 1 | 1 | 1 |
| Glas Luft | 7d RT | 1 | 1 | 1 | 1 | 1 | 1 |
| | + 7d H₂O | 1 | 1 | 1 | 1 | 1 | 1 |
| | + 7d 70/100 | 1 | 1 | 1 | 1 | 1 | 1 |
| Glass Zinn | 7d RT | 2 | 1 | 3 | 3 | 2 | 5 |
| | + 7d H₂O | 1 | 1 | 1 | 1 | 1 | 1 |
| | + 7d 70/100 | 1 | 1 | 1 | 1 | 1 | 1 |

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Beschreibung der Messmethoden

Die **Zugfestigkeit,** die **Bruchdehnung,** und der **E-Modul** wurden nach DIN EN ISO 527 (Zuggeschwindigkeit: 200 mm/min) an während 14 Tagen (d) bei 23°C (Raumtemperatur, "RT") und 50% relativer Luftfeuchtigkeit ausgehärteten Filmen mit einer Schichtdicke von 2 mm bestimmt.

Der **Schubmodul** (G-Modul) wurde bestimmt nach DIN 53283.

Für die Bestimmung der **Auspresskraft** wurden die Zusammensetzungen in innenlackierte Aluminiumkartuschen (Durchmesser aussen 46.9 mm, Durchmesser innen 46.2 mm Länge 215 mm, metrisches ISO-Gewinde M15 × 1.5 mm) gefüllt und mit einem Polyethlyen Stopfen (Durchmesser 46.1 mm) von Novelis Deutschland GmbH luftdicht verschlossen. Nach einer Konditionierung von 24 Stunden bei 23°C wurden die Kartuschen geöffnet und mittels Auspressgerät ausgepresst. Dafür wurde eine Düse mit einer 5 mm Innendurchmesser-Öffnung auf das Kartuschengewinde aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.

Weitere Messreihen wurde durchgeführt, nachdem identische Kartuschen jeweils während 7, 14 und 21 Tagen bei 60 °C gelagert und danach auf Raumtemperatur abgekühlt wurden. Die Durchführung dieser Messungen zur Auspresskraft erfolgte danach in der gleichen Vorgehensweise wie bei der ersten Messreihe. Diese weiteren Messreihen dienten einer Einschätzung der Lagerstabilität der Zusammensetzungen.

Für die Bestimmung der **Haftung** wurden Klebstoffraupen der hergestellten Zusammensetzungen auf die entsprechenden Substrate appliziert, unterschiedlichen Lagerungsbedingungen ausgesetzt und danach bei Raumtemperatur (23°C) und 50% relativer Luftfeuchtigkeit mittels "Raupentest" geprüft. Hierbei wird am Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Platzieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch Abschätzen des kohäsiven Anteils der Haftfläche (höherer kohäsiver Anteil bedeutet bessere Haftung):
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch)

Die Lagerungsbedingungen für die Haftversuche waren 7 Tage bei 23°C und 50% relativer Luftfeuchtigkeit (bei Haftung in Tabelle 3: erste Zahl), zusätzlich dazu 14 Tage bei 23°C und 50% relativer Luftfeuchtigkeit (zweite Zahl), zusätzlich dazu 1 Tag bei 80°C und 50% relativer Luftfeuchtigkeit (dritte Zahl).

Als Substrate (Haftuntergründe) bei den oben beschriebenen Haftversuchen dienten folgende gläserne oder keramisch beschichtete gläserne Materialien: Automobilscheibenglas mit keramischer Beschichtung Typ Ferro 3402 ("Ferro 3402"), mit keramischer Beschichtung Typ Ferro 14251 ("Ferro 14251") und mit keramischer Beschichtung Typ Ferro 14279 ("Ferro 14278"), sowie Floatglas, luftseitig beklebt ("Glas Luft") und Floatglas, zinnseitig beklebt ("Glas Zinn"). Alle diese Haftuntergründe sind erhältlich von Rocholl GmbH, Deutschland.

### Herstellung des Isocyanatgruppen aufweisenden Polyurethanpolymers P-1

1300 g Polyoxypropylendiol (Acclaim^{®} 4200 N, Bayer MaterialScience AG, Deutschland; OH-Zahl 28.5 mg KOH/g), 2600 g Polyoxypropylenpolyoxyethylentriol (Caradol^{®} MD34-02, Shell Chemicals Ltd., UK; OH-Zahl 35.0 mg KOH/g), 600 g 4,4'-Methylendiphenyldiisocyanat (4,4'-MDI; Desmodur^{®} 44 MC L, Bayer MaterialScience AG, Deutschland) und 500 g Diisodecylphthalat (DIDP; Palatinol^{®} Z, BASF SE, Deutschland) wurden nach bekanntem Verfahren bei 80 °C zu einem NCO-terminierten Polyurethanpolymer mit einem Gehalt an freien Isocyanatgruppen von 2.05 Gew.-% umgesetzt.

### Herstellung der Zusammensetzungen Z-1 bis Z-3

In einem Vakuummischer wurden entsprechend den in der Tabelle 1 angegebenen Gewichtsteilen (Gew.-%) bei allen Zusammensetzungen 2150 g Polymer P-1 und der Weichmacher Diisodecylphthalat (DIDP; Palatinol^{®} Z, BASF SE, Deutschland) vorgelegt, wobei für ***Z-1*** 1015 g DIDP verwendet wurden, für ***Z-2*** 990 g und für ***Z-3*** 1025 g. Daraufhin wurden im Fall der erfindungsgemässen Zusammensetzung ***Z-2*** 25 g 8-Hydroxychinolin (Sigma-Aldrich Chemie GmbH, Schweiz) zugegeben. In allen Zusammensetzungen wurden danach 15 g 3-Glycidoxy-propyltrimethoxysilan (Silquest* A-187, Momentive Performance Materials AG, Deutschland) beigefügt, gefolgt von 750 g Russ (Monarch^{®} 570, Cabot Corp., USA), 1000 g Kaolin (Satintone^{®} W, BASF SE, Deutschland) und 50 g Kieselsäure (Aerosil^{®} R972, Evonik Industries AG, Deutschland). Daraufhin erfolgte die Zugabe des Amin-Katalysators 2,2'-Dimorpholindiethylether (DMDEE; Lupragen^{®} N106, BASF SE, Deutschland), wobei in ***Z-1*** und ***Z-2*** je-weils 5 g zugegeben wurden und in ***Z-3*** 10 g. Anschliessend erfolgte in den Fällen von ***Z-1*** und ***Z-2*** die Zugabe von 15 g eines Organozinn(IV)-Katalysators (Dibutylzinndiacetat; BNT-CAT 400, BNT Chemicals GmbH, Deutschland), als 10 Gew.-% Lösung in DIDP. Der Mischer wurde verschlossen und während 20 min bei 1000-1200 Umdrehungen unter Vakuum gerührt und zu einer homogenen Paste mit einer Gesamtmasse von 5000 g verarbeitet. Diese wurde dann in innenlackierte Aluminium-Spreizkolben-Kartuschen abgefüllt.

**Tabelle 1: Inhaltsstoffe in Gewichtsteilen (Gew.-%) der erfindungsgemässen Zusammensetzung Z-2 und der Referenzzusammensetzungen Z-1 und Z-3.**

| *Inhaltsstoff* | ***Z-1*** | ***Z-2*** | ***Z-3*** |
|---|---|---|---|
| Polymer P-1 | 43 | 43 | 43 |
| DIDP | 20.3 | 19.8 | 20.5 |
| 8-Hydroxychinolin (10% in DIDP) | - | 0.5 | - |
| Silquest A-187 | 0.3 | 0.3 | 0.3 |
| Monarch 570 | 15 | 15 | 15 |
| Satintione W | 20 | 20 | 20 |
| Aerosil R972 | 1 | 1 | 1 |
| DMDEE | 0.1 | 0.1 | 0.2 |
| Dibutylzinndiacetat (10% in DIDP) | 0.3 | 0.3 | - |
| ***TOTAL*** | *100* | *100* | *100* |

**Tabelle 2: Testresultate der erfindungsgemässen Zusammensetzung Z-2 und der Referenzzusammensetzungen Z-1 und Z-3 nach den weiter oben beschriebenen Messmethoden.**

| *Messparameter* | ***Z-1*** | ***Z-2*** | ***Z-3*** |
|---|---|---|---|
| Zugfestigkeit [MPa] | 6.5 | 8.1 | 8.2 |
| Bruchdehnung [%] | 290 | 300 | 335 |
| E-Modul, 0.5-5% [MPa] | 6.5 | 8.9 | 9.8 |
| G-Modul, 10%, [MPa] | 1.6 | 2.8 | 2.6 |
| Auspresskraft 7d RT [N] | 746 | 743 | 723 |
| Auspresskraft 7d 60°C [N] | 924 | 898 | 854 |
| Auspresskraft 14d 60°C [N] | 1535 | 1034 | 1016 |
| Auspresskraft 21d 60°C [N] | 2679 | 1121 | 1077 |

Die Resultate der Messungen (Tabelle 2) zeigen, dass die Kombination von Organozinn(IV)-Katalysator und Silan-Haftvermittler ohne Chelatkomplex-Bildner (Referenzzusammensetzung Z-1) sich negativ auf die Mechanik (Zugfestigkeit und Bruchdehnung) auswirkt und auch die Stabilität unzureichend ist (starke Zunahme der Auspresskraft). Durch erfindungsgemässe Zugabe eines Chelatkomplex-Bildners wie in Z-2 werden ähnliche Endeigenschaften und Lagerstabilität erreicht wie bei der reinen Amin-Katalyse (Referenz Z-3).

**Tabelle 3: Resultate der Haftversuche auf verschiedenen Substraten und gemäss den weiter oben beschriebenen Bediungungen der erfindungsgemässen Zusammensetzung Z-2 und der Referenzzusammensetzungen Z-1 und Z-3.**

| *Substrat* | *Bedingungen* | ***Z-1*** | ***Z-2*** | ***Z-3*** |
|---|---|---|---|---|
| Ferro 3402 | 7d RT | 5 | 5 | 5 |
| | 14d RT | 5 | 5 | 5 |
| | 1d 80°C | 1 | 1 | 2 |
| Ferro 14251 | 7d RT | 2 | 3 | 5 |
| | 14d RT | 3 | 3 | 5 |
| | 1d 80°C | 1 | 1 | 1 |
| Ferro 14279 | 7d RT | 2 | 3 | 4 |
| | 14d RT | 4 | 3 | 5 |
| | 1d 80°C | 1 | 1 | 1 |
| Glas Luft | 7d RT | 1 | 1 | 1 |
| | 14d RT | 1 | 1 | 1 |
| | 1d 80°C | 1 | 1 | 1 |
| Glass Zinn | 7d RT | 1 | 1 | 4 |
| | 14d RT | 1 | 1 | 4 |
| | 1d 80°C | 1 | 1 | 1 |

Die Haftversuche zeigen deutlich, dass beim Haftungsaufbau (7d RT und mehr) die erfindungsgemässe Zusammensetzung Z-2 praktisch gleichwertig zum nicht chelat-komplexierten Organozinn(IV)-Katalysator (Z-1) und wesentlich besser als rein Amin-katalysiert (Z-3) wirkt. Die stabilisierende Wirkung des Chelatkomplex-Bildners geht also nicht zu Lasten des Haftungsaufbaus.

## Patentansprüche

1. Einkomponentige feuchtigkeitshärtende Klebstoff-Zusammensetzung umfassend
a) mindestens ein Isocyanatgruppen aufweisendes Polyurethanpolymer,
b) mindestens einen Silan-Haftvermittler,
c) mindestens einen Amin-Katalysator, und
d) mindestens einen Chelatkomplex-Bildner,
**dadurch gekennzeichnet, dass** die Zusammensetzung mindestens einen Metall-Katalysator umfasst und dass der Chelatkomplex-Bildner mindestens einen aromatischen Ring enthält.

2. Einkomponentige feuchtigkeitshärtende Klebstoff-Zusammensetzung gemäss Anspruch 1, **dadurch gekennzeichnet, dass** der Metall-Katalysator ausgewählt ist aus der Gruppe der Organozinn(IV)-Verbindungen, Organotitanate oder Organozirkonate.

3. Einkomponentige feuchtigkeitshärtende Klebstoff-Zusammensetzung gemäss Anspruch 2, **dadurch gekennzeichnet, dass** der Metall-Katalysator eine Organozinn(IV)-Verbindung ist.

4. Einkomponentige feuchtigkeitshärtende Klebstoff-Zusammensetzung gemäss Anspruch 2 oder 3, **dadurch gekennzeichnet, dass** der Metall-Katalysator eine Organozinn(IV)-Verbindung umfasst, die mit einem Anteil von 0.001 Gew.-% bis 0.2 Gew.-%, insbesondere 0.005 Gew.-% bis 0.1 Gew.-%, bezogen auf die Gesamtzusammensetzung, enthalten ist.

5. Einkomponentige feuchtigkeitshärtende Klebstoff-Zusammensetzung gemäss einem der Ansprüche 2 bis 4, **dadurch gekennzeichnet, dass** das molare Verhältnis zwischen Chelatkomplex-Bildner und Metall-Katalysator im Bereich von 2 bis 6, insbesondere von 2 bis 4, liegt.

6. Einkomponentige feuchtigkeitshärtende Klebstoff-Zusammensetzung gemäss einem der vorhergehenden Ansprüche, **dadurch gekennzeichnet, dass** das Isocyanatgruppen aufweisende Polyurethanpolymer mit einem Anteil von 10 Gew.-% bis 70 Gew.-%, insbesondere 15 Gew.-% bis 60 Gew.-%, besonders bevorzugt 20 Gew.-% bis 50 Gew.-%, bezogen auf die Gesamtzusammensetzung, enthalten ist.

7. Einkomponentige feuchtigkeitshärtende Klebstoff-Zusammensetzung gemäss einem der vorhergehenden Ansprüche, **dadurch gekennzeichnet, dass** der Silan-Haftvermittler mit einem Anteil von 0.01 Gew.-% bis 1 Gew.-%, insbesondere 0.05 Gew.-% bis 0.5 Gew.-%, bezogen auf die Gesamtzusammensetzung, enthalten ist.

8. Einkomponentige feuchtigkeitshärtende Klebstoff-Zusammensetzung gemäss einem der vorhergehenden Ansprüche, **dadurch gekennzeichnet, dass** der Amin-Katalysator mit einem Anteil von 0.05 Gew.-% bis 1 Gew.-%, insbesondere 0.1 Gew.-% bis 0.8 Gew.-%, besonders bevorzugt 0.15 Gew.-% bis 0.6 Gew.-%, bezogen auf die Gesamtzusammensetzung, enthalten ist.

9. Einkomponentige feuchtigkeitshärtende Klebstoff-Zusammensetzung gemäss einem der vorhergehenden Ansprüche, **dadurch gekennzeichnet, dass** der Chelatkomplex-Bildner mit einem Anteil von 0.01 Gew.-% bis 0.5 Gew.-%, insbesondere 0.02 Gew.-% bis 0.2 Gew.-%, besonders bevorzugt 0.03 Gew.-% bis 0.1 Gew.-%, bezogen auf die Gesamtzusammensetzung, enthalten ist.

10. Einkomponentige feuchtigkeitshärtende Klebstoff-Zusammensetzung gemäss einem der vorhergehenden Ansprüche, **dadurch gekennzeichnet, dass** der Amin-Katalysator 2,2`-Dimorpholindiethylether oder ein Derivat davon umfasst.

11. Einkomponentige feuchtigkeitshärtende Klebstoff-Zusammensetzung gemäss einem der vorhergehenden Ansprüche, **dadurch gekennzeichnet, dass** der Silan-Haftvermittler ausgewählt ist aus der Gruppe 3-Glycidoxypropyl-trimethoxysilan, β-(3,4-Epoxycyclohexyl)ethyltrimethoxysilan, 3-Mercaptopropyltrimethoxysilan und 3-Methacryloxypropyltrimethoxysilan, wobei 3-Glycidoxypropyltrimethoxysilan bevorzugt ist.

12. Einkomponentige feuchtigkeitshärtende Klebstoff-Zusammensetzung gemäss einem der vorhergehenden Ansprüche, **dadurch gekennzeichnet, dass** der Chelatkomplex-Bildner ausgewählt ist aus 8-Hydroxychinolin und Dibenzoylmethan.

13. Verfahren zur Stabilisierung einer einkomponentigen feuchtigkeitshärtenden Klebstoff-Zusammensetzung auf Polyurethan-Basis enthaltend einen Silan-Haftvermittler, einen Metall-Katalysator und einen Amin-Katalysator, **dadurch gekennzeichnet, dass** der Klebstoff-Zusammensetzung ein Chelatkomplex-Bildner zugemischt wird, der mindestens einen aromatischen Ring enthält, bevorzugt mit einem Anteil von 0.01 Gew.-% bis 0.5 Gew.-%, insbesondere 0.02 Gew.-% bis 0.2 Gew.-%, besonders bevorzugt 0.03 Gew.-% bis 0.1 Gew.-%, bezogen auf die Gesamtzusammensetzung.

14. Verwendung einer einkomponentigen feuchtigkeitshärtenden Klebstoff-Zusammensetzung gemäss einem der Ansprüche 1 bis 12 als Kleb- oder Dichtstoff, insbesondere für die Klebung von Glas oder Siebdruckkeramik in Fahrzeugbau oder -reparatur.

15. Ausgehärtete Zusammensetzung erhältlich aus einer einkomponentigen feuchtigkeitshärtenden Klebstoff-Zusammensetzung gemäss einem der Ansprüche 1 bis 12 nach deren Härtung mit Wasser.

## Claims

1. One-component moisture-curing adhesive composition comprising
a) at least one polyurethane polymer containing isocyanate groups,
b) at least one silane adhesion promoter,
c) at least one amine catalyst, and
d) at least one chelate complexing agent,
**characterized in that** the composition comprises at least one metal catalyst and **in that** the chelate complexing agent comprises at least one aromatic ring.

2. One-component moisture-curing adhesive composition according to Claim 1, **characterized in that** the metal catalyst is selected from the group of organotin(IV) compounds, organotitanates or organozirconates.

3. One-component moisture-curing adhesive composition according to Claim 2, **characterized in that** the metal catalyst is an organotin(IV) compound.

4. One-component moisture-curing adhesive composition according to Claim 2 or 3, **characterized in that** the metal catalyst comprises an organotin(IV) compound which is present with a fraction of 0.001 wt% to 0.2 wt%, more particularly 0.005 wt% to 0.1 wt%, based on the overall composition.

5. One-component moisture-curing adhesive composition according to any of Claims 2 to 4, **characterized in that** the molar ratio between chelate complexing agent and metal catalyst is in the range from 2 to 6, more particularly from 2 to 4.

6. One-component moisture-curing adhesive composition according to any of the preceding claims, **characterized in that** the polyurethane polymer containing isocyanate groups is present with a fraction of 10 wt% to 70 wt%, more particularly 15 wt% to 60 wt%, very preferably 20 wt% to 50 wt%, based on the overall composition.

7. One-component moisture-curing adhesive composition according to any of the preceding claims, **characterized in that** the silane adhesion promoter is present with a fraction of 0.01 wt% to 1 wt%, more particularly 0.05 wt% to 0.5 wt%, based on the overall composition.

8. One-component moisture-curing adhesive composition according to any of the preceding claims, **characterized in that** the amine catalyst is present with a fraction of 0.05 wt% to 1 wt%, more particularly 0.1 wt% to 0.8 wt%, very preferably 0.15 wt% to 0.6 wt%, based on the overall composition.

9. One-component moisture-curing adhesive composition according to any of the preceding claims, **characterized in that** the chelate complexing agent is present with a fraction of 0.01 wt% to 0.5 wt%, more particularly 0.02 wt% to 0.2 wt%, very preferably 0.03 wt% to 0.1 wt%, based on the overall composition.

10. One-component moisture-curing adhesive composition according to any of the preceding claims, **characterized in that** the amine catalyst comprises 2,2'-dimorpholinodiethyl ether or a derivative thereof.

11. One-component moisture-curing adhesive composition according to any of the preceding claims, **characterized in that** the silane adhesion promoter is selected from the group of 3-glycidyloxypropyltrimethoxysilane, β-(3,4-epoxycyclohexyl)ethyltrimethoxysilane, 3-mercaptopropyltrimethoxysilane, and 3-methacryloyloxypropyltrimethoxysilane, preferably 3-glycidyloxypropyltrimethoxysilane.

12. One-component moisture-curing adhesive composition according to any of the preceding claims, **characterized in that** the chelate complexing agent is selected from 8-hydroxyquinoline and dibenzoylmethane.

13. Method for stabilizing a one-component moisture-curing adhesive composition based on polyurethane, comprising a silane adhesion promoter, a metal catalyst, and an amine catalyst, **characterized in that** the adhesive composition is admixed with a chelate complexing agent containing at least one aromatic ring, preferably with a fraction of 0.01 wt% to 0.5 wt%, more particularly 0.02 wt% to 0.2 wt%, very preferably 0.03 wt% to 0.1 wt%, based on the overall composition.

14. Use of a one-component moisture-curing adhesive composition according to any of Claims 1 to 12 as adhesive or sealant, more particularly for the bonding of glass or screen-printed ceramic in vehicle construction or vehicle repair.

15. Cured composition obtainable from a one-component moisture-curing adhesive composition according to any of Claims 1 to 12 after curing thereof with water.

## Revendications

1. Composition adhésive durcissant sous l'effet de l'humidité, à un composant, comprenant
a) au moins un polymère de polyuréthane présentant des groupes isocyanate,
b) au moins un promoteur d'adhérence de type silane,
c) au moins un catalyseur de type amine et
d) au moins un agent de formation de complexe chélaté,
**caractérisée en ce que** la composition comprend au moins un catalyseur métallique et **en ce que** l'agent de formation de complexe chélaté contient au moins un cycle aromatique

2. Composition adhésive durcissant sous l'effet de l'humidité, à un composant, selon la revendication 1, **caractérisée en ce que** le catalyseur métallique est choisi dans le groupe des composés organostanniques (IV), des organotitanates ou des organozirconates.

3. Composition adhésive durcissant sous l'effet de l'humidité, à un composant, selon la revendication 2, **caractérisée en ce que** le catalyseur métallique est un composé organostannique (IV).

4. Composition adhésive durcissant sous l'effet de l'humidité, à un composant, selon la revendication 2 ou 3, **caractérisée en ce que** le catalyseur métallique comprend un composé organostannique (IV) qui est contenu en une proportion de 0,001% en poids à 0,2% en poids, en particulier de 0,005% en poids à 0,1% en poids, par rapport à la composition totale.

5. Composition adhésive durcissant sous l'effet de l'humidité, à un composant, selon l'une des revendications 2 à 4, **caractérisée en ce que** le rapport molaire entre l'agent de formation de complexe chélaté et le catalyseur métallique se situe dans la plage de 2 à 6, en particulier de 2 à 4.

6. Composition adhésive durcissant sous l'effet de l'humidité, à un composant, selon l'une des revendications précédentes, **caractérisée en ce que** le polymère de polyuréthane présentant des groupes isocyanate est contenu en une proportion de 10% en poids à 70% en poids, en particulier de 15% en poids à 60% en poids, de manière particulièrement préférée de 20% en poids à 50% en poids, par rapport à la composition totale.

7. Composition adhésive durcissant sous l'effet de l'humidité, à un composant, selon l'une des revendications précédentes, **caractérisée en ce que** le promoteur d'adhérence de type silane est contenu en une proportion de 0,01% en poids à 1% en poids, en particulier de 0,05% en poids à 0,5% en poids, par rapport à la composition totale.

8. Composition adhésive durcissant sous l'effet de l'humidité, à un composant, selon l'une des revendications précédentes, **caractérisée en ce que** le catalyseur de type amine est contenu en une proportion de 0,05% en poids à 1% en poids, en particulier de 0,1% en poids à 0,8% en poids, de manière particulièrement préférée de 0,15% en poids à 0,6% en poids, par rapport à la composition totale.

9. Composition adhésive durcissant sous l'effet de l'humidité, à un composant, selon l'une des revendications précédentes, **caractérisée en ce que** l'agent de formation de complexe chélaté est contenu en une proportion de 0,01% en poids à 0,5% en poids, en particulier de 0,02% en poids à 0,2% en poids, de manière particulièrement préférée de 0,03% en poids à 0,1% en poids, par rapport à la composition totale.

10. Composition adhésive durcissant sous l'effet de l'humidité, à un composant, selon l'une des revendications précédentes, **caractérisée en ce que** le catalyseur de type amine comprend du 2,2'-dimorpholinediéthyléther ou un dérivé de celui-ci.

11. Composition adhésive durcissant sous l'effet de l'humidité, à un composant, selon l'une des revendications précédentes, **caractérisée en ce que** le promoteur d'adhérence de type silane est choisi dans le groupe formé par le 3-glycidoxypropyltriméthoxysilane, le β-(3,4-époxycyclohexyl)éthyltriméthoxysilane, le 3-mercaptopropyltriméthoxysilane et le 3-méthacryloxypropyltriméthoxysilane, le 3-glycidoxypropyltriméthoxysilane étant préféré.

12. Composition adhésive durcissant sous l'effet de l'humidité, à un composant, selon l'une des revendications précédentes, **caractérisée en ce que** l'agent de formation de complexe chélaté est choisi parmi la 8-hydroxyquinoléine et le dibenzoylméthane.

13. Procédé pour la stabilisation d'une composition adhésive durcissant sous l'effet de l'humidité, à un composant, à base de polyuréthane, contenant un promoteur d'adhérence de type silane, un catalyseur métallique et un catalyseur de type amine, **caractérisé en ce que** la composition adhésive est mélangée avec un agent de formation de complexe chélaté qui contient au moins un cycle aromatique, de préférence avec une proportion de 0,01% en poids à 0,5% en poids, en particulier de 0,02% en poids à 0,2% en poids, de manière particulièrement préférée de 0,03% en poids à 0,1% en poids, par rapport à la composition totale.

14. Utilisation d'une composition adhésive durcissant sous l'effet de l'humidité, à un composant, selon l'une des revendications 1 à 12 comme adhésif ou substance d'étanchéité, en particulier pour le collage de verre ou de céramique sérigraphiée dans la construction ou la réparation de véhicules

15. Composition durcie pouvant être obtenue à partir d'une composition adhésive durcissant sous l'effet de l'humidité, à un composant selon l'une des revendications 1 à 12 après son durcissement avec de l'eau.
